Europäisches Patentamt

(19) European Patent Office   (11) Numéro de publication: **0 020 265**
Office européen des brevets   **B1**

(12)                    **FASCICULE DE BREVET EUROPEEN**

(45) Date de publication du fascicule du brevet: **18.05.83**   (51) Int. Cl.³: **F 28 D 7/00**

(21) Numéro de dépôt: **80400750.8**

(22) Date de dépôt: **28.05.80**

(54) Echangeur de chaleur pour réacteur nucléaire.

(30) Priorité: **31.05.79 FR 7913999**

(43) Date de publication de la demande:
**10.12.80 Bulletin 80/25**

(45) Mention de la délivrance du brevet:
**18.05.83 Bulletin 83/20**

(84) Etats contractants désignés:
**BE DE FR GB IT NL**

(56) Documents cités:
**DE - A - 2 713 668
DE - A - 2 812 056
FR - A - 2 172 170
FR - A - 2 323 423
FR - A - 2 360 057
FR - A - 2 379 881**

**ATOOMENERGIE EN HAAR TOEPASSINGEN vol.
12, septembre 1970, no. 9, G. A. DE BOER:
"Ontwikkeling von componenten voor en met
natrium gekoelde snelle reactor" p. 249, alinéas
2 et 3; fig. 4**

(73) Titulaire: **COMMISSARIAT A L'ENERGIE
ATOMIQUE Etablissement de Caractère
Scientifique Technique et Industriel
B.P. 510
F-75752 Paris Cedex 15 (FR)**

(72) Inventeur: **Artaud, Robert
9, Avenue Claude Debussy
F-13100 Aix en Provence (FR)**
Inventeur: **Aubert, Michel
Chemin de Sainte Roustagne
F-04100 Manosque (FR)**
Inventeur: **Elbeze, Richard
Val de la Torse Aramis 3
F-13100 Aix en Provence (FR)**
Inventeur: **Renaux, Charley
"Les Extrées"
F-13490 Jouques (FR)**

(74) Mandataire: **Mongrédien, André et al,
c/o BREVATOME 25, rue de Ponthieu
F-75008 Paris (FR)**

Courier Press, Leamington Spa, England.

Echangeur de chaleur pour réacteur nucléaire

La présente invention a pour objet un échangeur de chaleur pour réacteur nucléaire.

De façon plus précise, l'invention concerne un échangeur de chaleur pour des réacteurs nucléaires du type à neutrons rapides refroidis par un métal liquide tel que du sodium, dans lesquels ces échangeurs sont logés dans la cuve principale du réacteur. De tels échangeurs, appelés communément échangeurs intermédiaires assurent un transfert de calories entre le fluide primaire qui est constitué le plus souvent par du sodium liquide et un fluide secondaire également constitué par du sodium liquide, ce sodium secondaire échangeant à l'extérieur de la cuve ses calories avec un circuit d'eauvapeur pour produire in fine l'énergie électrique.

De façon plus précise encore, l'invention concerne des échangeurs sodium-sodium du type à tubes droits dans lesquels ces tubes sont montés entre deux chambres collectrices du fluide secondaire, respectivement d'introduction et d'évacuation, le faisceau de tubes ayant la forme d'un anneau disposé entre une virole externe et une cheminée interne servant à l'alimentation de la chambre d'introduction. Par ailleurs, dans le type de générateur considéré, l'introduction du métal liquide primaire et sa sortie se font par deux fenêtres ouvertes respectivement à la partie supérieure et à la partie inférieure de la virole externe entre les chambres d'entrée et d'évacuation. Un tel échangeur est connu de la revue "Atoom-energie", Vol. 12, septembre 1970, page 249.

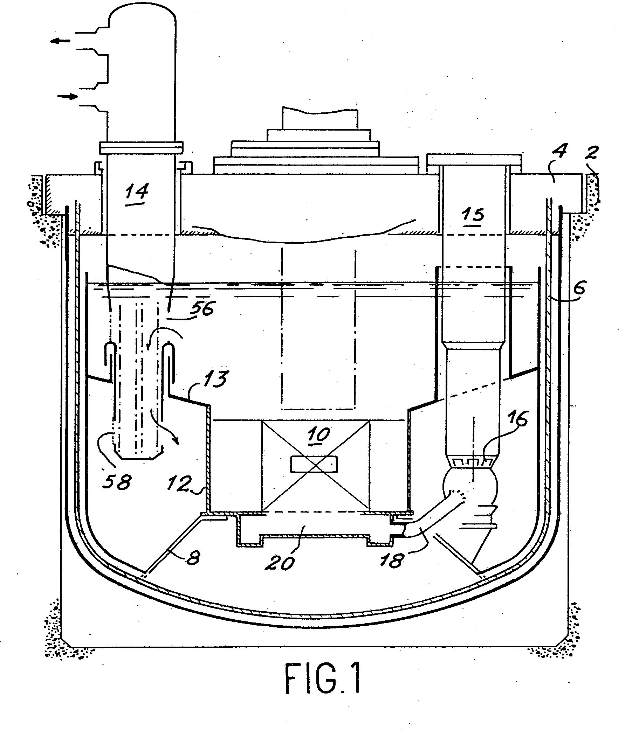

Dans le cas des réacteurs du type intégré et comme on le comprendra mieux en se référant à la fig. 1 annexée que l'on va décrire ci-après, l'échangeur de chaleur est suspendu par sa partie supérieure à une dalle qui ferme la cuve du réacteur, Cet échangeur ayant par exemple une longueur d'échange de 8 mètres et le volume correspondant étant rempli par du sodium liquide, les masses mises en jeu sont importantes. En outre, le sodium est maintenu sous une légère pression pour assurer sa mise en circulation et il applique donc aux différentes parties de l'échangeur des efforts dynamiques. Enfin, il existe des gradients importants de température dans les différentes parties de l'échangeur et il s'ensuit des problèmes de dilatations thermiques qui introduisent à leur tour des contraintes mécaniques dans l'échangeur.

Sur la fig. 1, on a représenté en coupe verticale un réacteur nucléaire à neutrons rapides refroidi par un métal liquide du type intégré.

Sur cette fig. 1, qui est très simplifiée, on voit l'enceinte bétonnée 2 qui est fermée à sa partie supérieure par la dalle 4. La cuve principale 6 est suspendue à cette dalle. Le platelage 8 supporte le coeur 10 du réacteur. Un cuve interne 12 à redan 13 sépare le sodium chaud du sodium froid. Des échangeurs intermédiaires tels que 14 sont suspendus à la dalle 4.

Chaque échangeur traverse de façon étanche le redan 13. Un fenêtre d'entrée 56 (disposée au-dessus du redan) et une fenêtre de sortie 58 (disposée en-dessous du redan) assurent la circulation du sodium primaire dans l'échangeur. Chaque échangeur comprend un faisceau de tubes droits ou "sensiblement" droits, cette dernière expression signifiant que les tubes peuvent comporter sur une fraction de leur longueur, notamment à leurs extrémités, des parties en forme de portion d'hélice destinées à conférer aux tubes une plus grande souplesse. On trouve également des pompes primaires telles que 15 suspendues à la dalle 4. Ces pompes 15 comportent des fenêtres d'entrée 16 et leur sortie est raccordée par des tubulures telles que 18 au sommier 20 du réacteur disposé en-dessous du coeur 10. Dans l'échangeur 14 circule également un fluide secondaire qui est le plus souvent également du sodium.

L'invention a pour objet un mode perfectionné de réalisation de l'échangeur intermédiaire 14.

L'échangeur intermédiaire selon l'invention pour un réacteur nucléaire du type dans lequel la cuve principale est fermée par une dalle supérieure, comprend une pluralité de tubes d'échange sensiblement droits mointés entre, d'une part, un plaque à tubes annulaire supérieure associée à un chambre d'évacuation du fluide secondaire et, d'autre part, une plaque à tubes annulaire inférieure associée à une chambre d'introduction, une virole entourant lesdits tubes et munie d'une fenêtre d'entrée et d'une fenêtre de sortie pour le fluids primaire, un cheminée centrale communiquant avec ladite chambre d'introduction, un collecteur d'alimentation et un collecteur d'évacuation pour ledit fluide secondaire. Il se caractérise en ce qu'il comprend une virole de supportage solidaire de la périphérie de la plaque à tubes supérieure et fermée à son extrémité supérieure par un dôme, ladite virole comportant sur sa périphérie externe une bride de supportage par ladite dalle, lesdits collecteurs étant disposés l'un au-dessus de l'autre dans ladite virole de supportage et étant solidaires d'une plaque horizontale elle-même solidaire de ladite virole de supportage, le collecteur d'alimentation étant raccordé par au moins une conduite à l'extrémité supérieure de ladite cheminée, le collecteur d'évacuation étant raccordé à ladite chambre d'évacuation également par au moins une conduite, lesdites conduites étant logées dans ladite virole de supportage.

De préférence, l'extrémité supérieure de ladite cheminée est solidaire d'un ballon; ledit ballon est raccordé audit collecteur d'alimentation par une pluralité de conduites enforme d'hélice; et ladite chambre d'évacuation est raccordée au collecteur d'évacuation par une pluralité de conduites ayant également la forme d'une hélice.

Selon un premier mode de réalisation, ladite cheminée consiste en une virole externe solidaire par son extrémité inférieure de la périphérie interne de la plaque à tubes inférieure annulaire et en une virole interne solidiare dudit ballon par son extrémité supérieure et délimitant avec la virole externe un espace annulaire muni à son extrémité inférieure au niveau de la plaque à tubes inférieure de moyens pour réaliser une semi-étanchéité.

Selon un deuxième mode de réalisation, la partie interne de ladite cheminée est constituée par deux tubes coaxiaux soudés à leur extrémité inférieure, l'espace annulaire limité par lesdits deux tubes débouchant au-dessus de la chambre d'évacuation.

On décrira maintenant à titre d'exemples non limitatifs, deux modes de réalisation de l'invention en se référant aux dessins annexés dans lesquels:

— la fig. 1 déjà décrite, est une vue en coupe verticale d'un réacteur nucléaire refroidi par un métal liquide du type intégré,
— la fig. 2a est une vue en coupe verticale de la partie supérieure de l'échangeur de chaleur selon l'invention,
— la fig. 2b est une vue en coupe verticale de la partie inférieure de ce même échangeur de chaleur,
— la fig. 3a est une vue de détail de la fig. 2a montrant la liaison entre la cheminée centrale et la plaque à tubes inférieure, et
— la fig. 3b est une vue de détail d'une variante de réalisation de la liaison entres la plaque à tubes inférieure et la cheminée centrale.

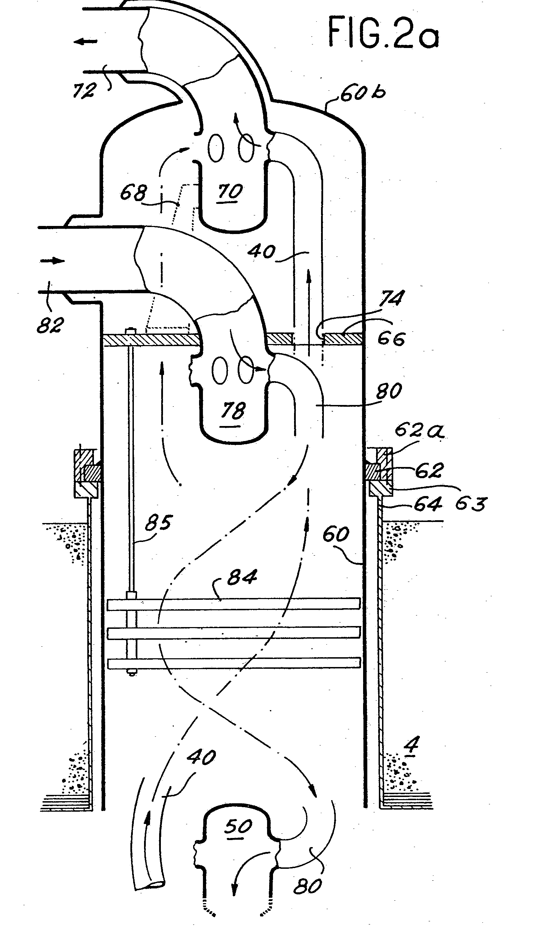

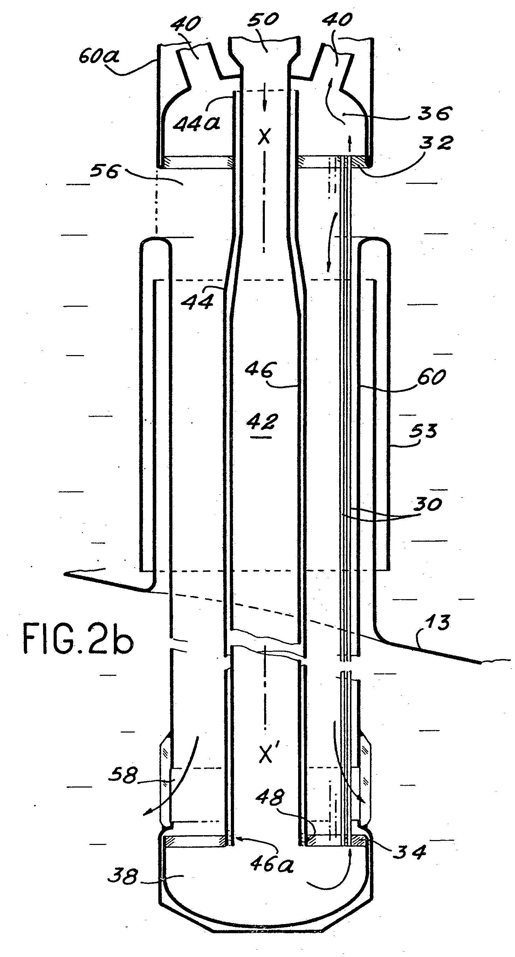

En se référant plus particulièrement aux fig. 2a et 2b, on va décrire la structure de l'echangeur intermédiaire selon l'invention. Sur la fig. 2b, on a représenté la partie inférieure qui consiste essentiellement dans la zone d'échange entre le fluide primaire et le fluide secondaire. Sur la fig. 2a, on a représenté plus particulièrement l'ensemble d'alimentation en fluide secondaire et l'ensemble de sortie du fluide secondaire échauffé après l'échange thermique, cet ensemble constituant la partie supérieure de l'échangeur.

La surface d'échange est constituée par des tubes d'échange sensiblement droits 30 qui sont montés entre une plaque à tubes annulaire supérieure 32 et une plaque à tubes inférieure 34 qui est également annulaire. Le faisceau de tubes d'échange 30 a également une forme annulaire constituée par exemple par des nappes concentriques d'axe vertical X—X', cet axe constituant également l'axe de symétrie de l'ensemble de l'échangeur. Sur les plaques à tubes annulaures 32 et 34, sont soudées des pièces hémisphériques constituant respectivement la chambre d'évacuation 36 du fluide secondaire et la chambre d'introduction 38 de ce même fluide secondaire. A la chambre de sortie 36, est raccordée une pluralité de conduites de sortie 40 disposées régulièrement par rapport à la chambre annulaire 36. L'alimentation en fluide secondaire de la chambre 38 et fait par une chaminée axiale 42 qui traverse les plaques annulaires 34 et 32.

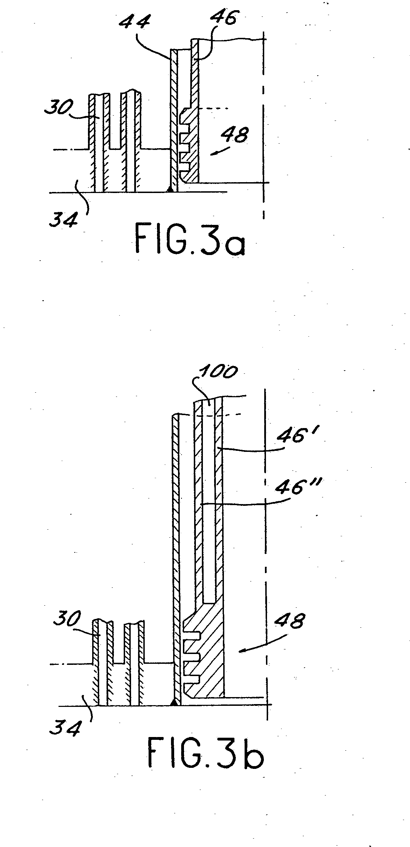

Dans le mode de réalisation représenté sur la fig. 2b, la cheminée 42 est de"limitée par un virole interne 46 dont l'extrémité supérieure est soudée à la pièce hèmisphérique définissant la chambre d'évacuation 36 et dont l'extrémité inférieure 46a est libre. La virole 46 est entourée par une virole cylindrique externe 44 qui est soudée à son extrémité inférieure sur la plaque à tubes inférieure 34 et à son extrémité supérieure sur la plaque à tubes supérieure 32, l'extrémité supérieure 44a de cette virole pénétrant à l'intérieuur de la chambre supérieure d'évacuation 36. L'extrémité inférieure 46a de la virole interne 46 est munie sur sa face externe de segments ou éléments d'étanchéite 48 coopérant avec l'extrémité inférieure de la virole externe 44 pour assurer une semi-étanchéité (cela est visible en détail sur la fig. 3a). L'extrémité supérieure de la virone interne 46 est raccordée au-dessus de la chambre annulaire 36 à un ballon d'alimentation 50. Le faisceau de tube 30 est entouré extérieurement par une virole de supportage 60. Cette virole 60 est munie à son extrémité supérieure d'une fenêtre d'introduction du métal liquide primaire 56 et à son extrémité inférieure d'une fenêtre 58 pour l'évacuation de ce même liquide primaire qui est en général du sodium. La virole 60 comporte, comme cela est bien connu, une jupe externe 53 délimitant un espace rempli d'argon qui assure une étanchéité pneumatique entre le sodium chaud et le sodium froid situés respectivement au-dessus et au-dessous du redan 13.

La partie supérieure de l'échangeur comporte en particulier les ensembles d'introduction et d'évacuation du métal liquide primaire qui sont enfermés dans la virole 60. Celle-ci est munie sur sa périphérie externe d'une bride 62 par laquelle cette virole est supportée. Pour cela, la bride 62, qui est maintenue par une contre-bride 62a, s'appuie sur la dalle 4 du réacteur par l'intermédiaire de la bride 63 et du manchon 64. La portion supérieure 60a de la virole de supportage 60 est soudée sur la périphérie externe de la plaque à tubes supérieure 32. On voit qu'ainsi la plaque à tubes supérieure 32, les tubes d'échange 30, la virole 44 et la plaque à tubes inférieure 34 ainsi qui sa chambre associée 38, sont supportés par l'intermédiaire de la virole 60.

A la partie supérieure de la virole de supportage 60 et en-dessous de son dôme de fermeture 60b, on trouve une plaque de supportage 66 sensiblement horizontale. Cette plaque 66 supporte par l'intermédiaire d'une pèce 68 le collecteur chaud 70 associé à une grosse conduite 72 assurant l'évacuation du métal liquide chaud secondaire hors de l'échangeur.

Ce collecteur chaud 70 est raccordé aux conduites 40 qui sortent de la chambre annulaire supérieure 36. Ces conduites 40 traversent la plaque de supportage 66 par des alésages 74. Comme on le voit sur les figures et afin de permettre d'absorber les dilatations thermiques, les conduites 40 ont une forme en hélice. En-dessous de la plaque de supportage 66, on trouve le collecteur froid de métal liquide secondaire qui est référencé 78. Ce collecteur froid 78 est raccordé au ballon 50 par l'intermédiaire de conduites 80 qui débouchent de façon régulière sur la périphérie du collecteur 78. Ces conduites 80 ont également une forme en hélice pour faciliter l'absorption des dilatations thermiques. Le collecteur froid est associé à une grosse conduite 82 d'alimentation en métal liquide secondaire froid, cette conduite étant supportée par la plaque 66.

Dans la zone supérieure entourée par la virole de supportage 60, on trouve également un ensemble de plaques horizontales 84 de protection biologique supportées également par la plaque de supportage 66 au moyen de tirants tels que 85. Ces plaques complètent la protection neutronique assurée par la dalle du réacteur à l'endroit où cette protection est interrompue par la traversée de l'échangeur intermédiaire.

Selon ce premier mode de réalisation, on voit que les plaques à tubes ainsi que les tubes d'échange sont supportés par la portion de la virole 60 située en-dessous de la bride 62. Les collecteurs d'alimentation 78 et d'évacuation 70 sont supportés par la plaque 66 situé au-dessus de la bride de supportage 62.

Selon la variante de réalisation représentée sur la fig. 3b la cheminée est constituée par deux tubes coaxiaux 46' et 46" soudés à leur extrémité inférieure et délimitant un espace annulaire 100 qui débouche à son extrémité supérieure au-dessus de la chambre d'évacuation 36. Cet espace annulaire contient de l'argon qui assure une isolation thermique entre le sodium "chaud" primaire et le sodium "froid" secondaire. Le supportage des différents éléments de l'échangeur se fait comme dans le cas de la fig. 3a.

Il découle de la description précédente que l'échangeur intermédiaire selon la présente invention présente de nombreux avantages par rapport aux échangeurs du même type de l'art antérieur:

— la désolidarisation du faisceau de tubes 30 de la partie haute de l'échangeur entraîne un soulagement des plaques à tubes 32 et 34 au-niveau des efforts qu'elles subissent. Le faisceau de tubes et les plaques ne sont soumis qu'à leur chargement mécanique propre dû à l'écoulement du sodium primaire.

— les efforts dus aux déplacements des tuyauteries secondaires 40 et 80 ne passent plus par les plaques à tubes:

. Au niveau de la plaque supérieure, les efforts passent par le ballon d'alimentation 50, la chambre d'évacuation du sodium secondaire chaud 36, la virole de supportage 60 et ils sont repris par la bride de supportage 62.

. La désolidarisation du faisceau décrite sur les fig. 3a et 3b annule les efforts transmis par le collecteur froid à la plaque inférieure.

— La position des points fixes, où se reportent les efforts et les couples dus aux déformations des tuyauteries secondaires est figée dans la géométrie proposée:

. En partie haute au niveau des collecteurs chaud 70 et froid 78 situés au-dessus de la dalle 4.

. En partie basse au niveau du ballon 50 d'alimentation en sodium secondaire froid et de la chambre 36 d'évacuation du sodium secondaire chaud.

. Les dilatations thermiques sont encaissées par les tuyauteries 40 et 80 enroulées en hélice.

— La géométrie proposée permet, en partie haute, de mieux s'accommoder des problèmes de la dissymétrie thermique en sortie secondaire:

. On peut attendre un meilleur mélange du sodium secondaire chaud au niveau du collecteur d'évacuation.

. L'assouplissement apporté à la partie haute lui permet de mieux s'accommoder des contraintes, liées à la dissymétrie thermique, qui étaient appliquées sur les viroles cylindriques des échangeurs de l'art antérieur.

## Revendications

1. Echangeur de chaleur pour réacteur nucléaire du type dans lequel la cuve principale (6) est fermée par une dalle supérieure (4), ledit échangeur comprenant une pluralité de tubes d'échange (30) sensiblement droits, montés entre, d'une part, une plaque à tubes annulaire supérieure (32) associée à une chambre d'évacuation (36) du fluide secondaire et, d'autre part, une plaque à tubes annulaire inférieure (34) associée à une chambre d'introduction (38), une virole (60) entourant lesdits tubes et munie d'une fenêtre d'entrée (56) et d'une fenêtre de sortie (58) pour le fluide primaire, une cheminée centrale (42) communiquant avec ladite chambre d'introduction, un collecteur d'alimentation (78) et un collecteur d'évacuation (70) pour ledit fluide secondaire, ledit échangeur se caractérisant en ce qu'il comprend und virole de supportage (60) solidaire de la périphérie de la plaque à tubes supérieure et fermée à son extrémité supérieure par un dôme (60b), ladite virole comportant sur sa périphérie externe une bride de supportage (62) par ladite dalle, ledits collecteurs étant disposés l'un au-dessus de l'autre dans ladite virole de supportage et étant solidaires d'une plaque horizontale (66) elle-même solidaire de ladite virole supportage (60), le collecteur d'alimentation (78) étant raccordé par un moins une conduite (80) à l'extrémité supérieure de ladite cheminée (42), le collecteur d'évacuation (70) étant raccordé à ladite chambre d'évacuation également par au moins une conduite (40), ledites conduites étant logées dans ladite virole de supportage.

2. Echangeur selon la revendication 1, caractérisé en ce que l'extrémité supérieure de ladite cheminée est solidaire d'un ballon, (50) en ce que ledit ballon est raccordé audit collecteur d'alimentation (78) par une pluralité da conduites (80) en forme d'hélice, et en ce que ladite chambre d'évacuation (36) est raccordée au collecteur d'évacuation (70) par une pluralité de conduites (40) ayante également la forme d'une hélice.

3. Echangeur selon la revendication 2, caractérisé en ce que ladite cheminée (42) consiste en une virole externe (44) solidaire par son extrémité inférieure de la périphérie interne de la plaque à tubes inférieure annulaire et en une virole interne (46) solidaire dudit ballon (50) par son extrémité supérieure et délimitant avec la virole externe un espace annulaire muni à son extrémité inférieure, au niveau de la plaque à tubes inférieure, de moyens pour réaliser une semi-étanchéité.

4. Echangeur selon la revendication 3, caractérisé en ce que la partie interne de ladite cheminée (42) est constituée par deux tubes coaxiaux soudés à leur extrémité inférieure, l'espace annulaire limité par lesdits deux tubes débouchant au-dessus de la chambre d'évacuation.

5. Echangeur selon l'une quelconque des revendications 1 à 4, caractérisé en ce qu'il comprend, à l'intérieur de ladite virole de supportage (60), une pluralité ce plaques horizontales (84) de protection biologique disposées au niveau de la dalle (4) dudit réacteur et supportées par ladite plaque horizontale solidaire de la virole de supportage.

## Patentansprüche

1. Wärmetauscher für einen einen durch eine obere Platte (4) abgeschlossenen Hauptbehälter (6) aufweisenden Kernreaktor, mit einer Anzahl von im wesentlichen geraden Wärmetauscherrohren (30), welche zwischen einer einer Austragskammer (36) für eine sekundäres Strömungsmittel zugeordneten, ringförmigen oberen Rohrwand (32) einerseits und einer einer Eintragskammer (38) zugeordneten, ringförmigen unteren Rohrwand (34) andererseits montiert sind, mit einem die genannten Rohre umgebenden Mantel (60), welcher ein Eintrittsfenster (56) sowie ein Austrittsfenster (58) für ein primäres Strömungsmittel aufweist, mit einem zentralen Schacht (42), welcher mit der Eintragskammer strömungsverbunden ist, sowie mit einem Eintrittssammler (78) und einem Austrittssammler (70) für das sekundäre Strömungsmittel, dadurch gekennzeichnet, daß der Wärmetauscher einen fest mit dem Umfang der oberen Rohrwand verbundenen und an seinem oberen Ende durch eine Kuppel (60b) verschlossenen, trangenden Mantel (60) aufweist, welcher an seinem äußeren Umfang einen mit der den Hauptbehälter abschließenden oberen Platte zusammenwirkenden Tragring (62) hat, daß die genannten Sammler übereinander innerhalb des tragenden Mantel (60) aufweist, welcher an einer waagerechten Wand (66) verbunden sind, welche ihrerseits fest mit dem tragenden Mantel (60) verbunden ist, daß der Eintrittssammler (78) über wenigstens eine Leitung (80) mit dem oberen Ende des Schachts (42) verbunden ist, daß der Austrittssammler (70) über ebenfalls wenigstens eine Leitung (40) mit der Austragskammer verbunden ist und daß die genannten Leitungen innerhalb des tragenden Mantels angeordnet sind.

2. Warmetauscher nach Anspruch 1, dadurch gekennzeichnet, daß das obere Ende des Schachts fest mit einer Kuppel (50) verbunden ist, welche ihrerseits über eine Anzahl von in Form von Schraubenlinien verlaufenden Leitungen (80) mit dem Eintrittssammler (78) verbunden ist, und daß die Austragskammer (36) über eine Anzahl von ebenfalls in Form von Schraubenlinien verlaufenden Leitungen (40) mit dem Austrittssammler (70) verbunden ist.

3. Wärmetauscher nach Anspruch 2, dadurch gekennzeichnet, daß der Schacht (42) aus einem an seinem unteren Ende fest mit dem inneren Umfang der ringförmigen unteren Rohrwand verbundenen äußeren Mantel (44) und einem an seinem oberen Ende fest mit der Kuppel (50) verbundenen inneren Mantel (46) besteht, welcher zusammen mit dem äußeren Mantel einen ringförmigen Raum umgrenzt, welcher an seinem unteren Ende, in Höhe der unteren Rohrwand, mit Einrichtungen für eine unvollständige Abdichtung versehen ist.

4. Wärmetauscher nach Anspruch 3, dadurch gekennzeichnet, daß das innere Teil des Schachts (42) aus zwei koaxialen, an ihren unteren Enden miteinander verschweißten Rohren gebildet ist und daß der von den beiden Rohren umgrenzte ringförmige Raum oberhalb der Austragskammer ausmündet.

5. Wärmetauscher nach einem der Ansprüche 1 bis 4, dadurch gekennzeichnet, daß er innerhalb des tragenden Mantels (60) eine Anzahl von waagerecht angeordneten biologischen Schutzwänden (84) enthält, welche in Höhe der Abschlußplatte (4) des Hauptbehälters angeordnet und an der fest mit dem tragenden Mantel verbundenen waagerechten Wans aufgehängt sind.

## Claims

1. Heat exchanger for a nuclear reactor of the type whose principal container (6) is closed by an upper slab (4), said exchanger comprising a plurality of substantially straight exchange tubes (30), mounted between, on the one hand an annular upper tube plate (32) associated with an outlet manifold (36) for secondary fluid and, on the other hand, an annular lower tube plate (34) associated with an inlet manifold (38), a sleeve (60) surrounding said tubes and provided with an inlet port (56) and an outlet port (58) for the primary fluid, a central chimney (42) communicating with said inlet manifold, an inlet collector (78) and an outlet collector (70) for said secondary fluid, said exchanger being characterized in that it comprises a support sleeve (60) fixed to the edge of the upper plate tube and closed at its top by a dome (60b), said sleeve having an external flange (62) for support by said slab, one of said collectors being located above and the other within said support sleeve and being fixed to a horizontal plate (66) which is itself fixed to said support sleeve (60), the inlet collector (78) being connected by at least one conduit (80) to the upper end of said chimney (42, the outlet collector (70) being likewise connected to said outlet manifold by at least one conduit (40), said conduits being located within said support sleeve.

2. Exchanger according to Claim 1, characterized in that the upper end of said chimney is unitary with a bulb (50) and in that said bulb is connected to said inlet collector (78) by a plurality of helical conduits (80), and in that said outlet manifold (36) is connected to the outlet collector (70) by a plurality of conduits (40) which also are helical.

3. Exchanger according to Claim 2 characterized in that said chimney (42) comprises an external sleeve (44) fixed at its lower end to the internal edge of the annular lower tube plate, and an internal sleeve (46), unitary with said bulb (50) at its upper end, and delimiting with the external sleeve an annular space having means providing a partial enclosure at its lower end, at the level of the lower tube plate.

4. Exchanger according to Claim 3 characterized in that the internal portion of said chimney (42) is constituted by two coaxial tubes, welded at their lower ends, the annular space limited by said two tubes opening at the top into the outlet manifold.

5. Exchanger according to any one of Claims 1 to 4 characteriaed in that it comprises within said support sleeve (60) a plurality of horizontal bioligical protection plates (84) dispersed at the level of the slab (4) of said reactor and supported by said horizontal plate fixed to the support sleeve.

FIG.1

1

# FIG.2a

FIG.2b

0 020 265

FIG.3a

FIG.3b

4